# EUROPEAN PATENT APPLICATION

(11) **EP 4 704 486 A1**
(43) Date of publication of application: **04.03.2026**
(21) Application number: 23934448.4
(22) Date of filing: 25.04.2023
(51) Int. Cl.: H04W 74/08

(54) **BEAM DETERMINING METHOD AND APPARATUS, AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Dehns Germany Partnerschaft mbB
(86) International application number: PCT/CN2023/090684
(87) International publication number: WO 2024/221243

(57) **Abstract**

The present disclosure relates to the technical field of communications, and provides a beam determining method and apparatus, and a storage medium. The method comprises: by means of interaction between a user equipment (UE) and a network device, the network device sends a plurality of synchronization signal/physical broadcast channel block (SSB) beams to the UE, and the UE determines a first SSB beam which is used for random access, wherein the plurality of SSB beams include the first SSB beam, and the first SSB beam is used for random access. According to the solution of the present disclosure, a UE can receive a gain difference value between an SBFD symbol and a non-SBFD symbol from a network side, so that an optimal SSB beam is determined on the basis of the gain difference value, and the accuracy of the optimal SSB is ensured. By limiting a time domain position sent by an SSB signal, the method can further avoid the effect of a beam gain difference between a non-SBFD symbol and an SBFD symbol on optimal SSB beam selection, thereby ensuring the accuracy of an optimal SSB.

## Description

### TECHNICAL FIELD

The present disclosure relates to the field of communication technology, specifically to a method and an apparatus for determining a beam, and a storage medium.

### BACKGROUND

When a user equipment (UE) in an idle state initially accesses a cell, the UE may select an optimal synchronization signal/physical broadcast channel block (SSB) by measuring information such as a received signal strength of an SSB beam. For a subband full duplex (SBFD) symbol and a non-SBFD symbol, a number of transmit radio frequency chains (Tx chains) used for downlink (DL) transmission is different from a number of antenna elements used for DL transmission, which results in a difference in beam gain between the non-SBFD symbol and the SBFD symbol, and leads to an inaccurate selection of the optimal SSB beam. The non-SBFD symbol includes at least one of: a DL symbol or a flexible (F) symbol. Currently, there is no conclusive solution to how to avoid the impact of the gain difference on the selection of the optimal SSB.

### SUMMARY

The present disclosure provides a method and an apparatus for determining a beam, and a storage medium, which are used for a UE to determine an optimal SSB beam sent by a base station.

According to a first aspect, the embodiments of the present disclosure provide a method for determining a beam. The method is performed by a UE and includes: determining a first SSB beam, in which the first SSB beam is used for a random access.

In some embodiments of the present disclosure, the method further includes: receiving first information sent by a network device, in which the first information indicates a gain difference between an SBFD symbol and a non-SBFD symbol, and the non-SBFD symbol includes at least one of a DL symbol or an F symbol.

In some embodiments of the present disclosure, the method further includes: receiving, on the SBFD symbol and the non-SBFD symbol, a plurality of SSB signals sent by the network device in a plurality of beam directions; determining first signal strengths corresponding to the plurality of SSB signals respectively by measuring the plurality of SSB signals; and determining second signal strengths corresponding to the plurality of SSB signals respectively based on the first information and the first signal strengths.

In some embodiments of the present disclosure, receiving, on the SBFD symbol and the non-SBFD symbol, the plurality of SSB signals sent by the network device in the plurality of beam directions includes: receiving at least one first SSB signal among the plurality of SSB signals on the SBFD symbol; and receiving at least one second SSB signal among the plurality of SSB signals on the non-SBFD symbol.

In some embodiments of the present disclosure, determining the first SSB beam includes: determining the first SSB beam based on the second signal strengths; and performing the random access using the first SSB beam.

In some embodiments of the present disclosure, determining the first SSB beam based on the second signal strength includes: determining a beam direction corresponding to an SSB signal with a maximum second signal strength as the first SSB beam.

In some embodiments of the present disclosure, the method further includes: determining the first SSB beam based on the first signal strengths; and performing the random access using the first SSB beam.

In some embodiments of the present disclosure, determining the first SSB beam based on the first signal strength includes: determining a beam direction corresponding to an SSB signal with a maximum first signal strength as the first SSB beam.

In some embodiments of the present disclosure, a beam direction corresponding to an SSB signal with a maximum first signal strength is determined as the first SSB beam.

In some embodiments of the present disclosure, a second SSB beam is determined based on the second signal strengths; the second SSB beam is reported to the network device; and data reception after the random access is performed using the second SSB beam.

In some embodiments of the present disclosure, determining the second SSB beam based on the second signal strength includes: determining a beam direction corresponding to an SSB signal with a maximum second signal strength as the second SSB beam.

In some embodiments of the present disclosure, determining the second signal strengths of the plurality of SSB signals based on the first information and the first signal strengths includes: determining the second signal strength of the first SSB signal as the first signal strength; and determining the second signal strength of the second SSB signal as a sum of the first signal strength and the gain difference.

In some embodiments of the present disclosure, the method further includes: receiving, on an SBFD symbol or a non-SBFD symbol, a plurality of SSB signals sent by a network device in a plurality of beam directions; and determining first signal strengths corresponding to the plurality of SSB signals respectively by measuring the plurality of SSB signals.

In some embodiments of the present disclosure, determining the first SSB beam includes: determining the first SSB beam based on the first signal strengths.

In some embodiments of the present disclosure, determining the first SSB beam based on the first signal strength includes: determining a beam direction corresponding to an SSB signal with a maximum first signal strength as the first SSB beam.

According to a second aspect, the embodiments of the present disclosure provide a method for determining a beam. The method is performed by a network device and includes: sending a plurality of SSB beams, in which the plurality of SSB beams include a first SSB beam, and the first SSB beam is used for a random access and determined by a UE.

In some embodiments of the present disclosure, the method further includes: sending first information to the UE, in which the first information indicates a gain difference between an SBFD symbol and a non-SBFD symbol, and the non-SBFD symbol includes at least one of a DL symbol or an F symbol.

In some embodiments of the present disclosure, sending the plurality of SSB beams includes: sending, on the SBFD symbol and the non-SBFD symbol, a plurality of SSB signals to the UE in a plurality of beam directions.

In some embodiments of the present disclosure, sending, on the SBFD symbol and the non-SBFD symbol, the plurality of SSB signals to the UE in the plurality of beam directions includes: sending at least one first SSB signal among the plurality of SSB signals to the UE on the SBFD symbol; and sending at least one second SSB signal among the plurality of SSB signals to the UE on the non-SBFD symbol.

In some embodiments of the present disclosure, the method further includes: receiving a second SSB beam reported by the UE; and performing, using the second SSB, data transmission after the random access.

In some embodiments of the present disclosure, the second SSB beam is a beam direction corresponding to an SSB signal with a maximum second signal strength determined by the UE, a second signal strength is determined by the UE based on the first information and a first signal strength, and the first signal strength is obtained by the UE by measuring the plurality of SSB signals.

In some embodiments of the present disclosure, the second signal strength of the first SSB signal is equal to the first signal strength; and the second signal strength of the second SSB signal is equal to a sum of the first signal strength and the gain difference.

In some embodiments of the present disclosure, sending the plurality of SSB beams includes: sending, on an SBFD symbol or a non-SBFD symbol, a plurality of SSB signals to the UE in a plurality of beam directions.

According to a third aspect, the embodiments of the present disclosure provide an apparatus for determining a beam. The apparatus is configured in a UE and includes: a determining unit, configured to determine a first SSB beam, in which the first SSB beam is used for a random access.

According to a fourth aspect, the embodiments of the present disclosure provide an apparatus for determining a beam. The apparatus is configured in a network device and includes: a sending unit, configured to send a plurality of SSB beams, in which the plurality of SSB beams include a first SSB beam, and the first SSB beam is used for a random access and determined by a UE.

According to a fifth aspect, the embodiments of the present disclosure provide a communication apparatus. The communication apparatus includes a processor and a memory for storing a computer program that, when executed by the processor, cause the communication apparatus to implement the method of any one of the first aspect to the fourth aspect above.

According to a sixth aspect, the embodiments of the present disclosure provide a communication apparatus. The communication apparatus includes a processor and an interface circuit, in which the interface circuit is configured to receive code instructions and transmit them to the processor; the processor is configured to run the code instructions to perform the method of any one of the first aspect to the fourth aspect.

According to a seventh aspect, the embodiments of the present disclosure provide a computer-readable storage medium for storing instructions used for a network device that, when executed, a terminal is caused to implement the method of any one of the first aspect to the fourth aspect.

According to an eighth aspect, the embodiments of the present disclosure provide a communication system, including a UE and a network device, in which the UE is configured to implement the method of the first aspect; the network device is configured to implement the method of the second aspect.

In summary, according to the method for determining a beam provided by the present disclosure, the method is performed by the UE and includes: determining the first SSB beam, in which the first SSB beam is used for the random access. In the solution of the present disclosure, the UE may determine an optimal SSB beam by receiving the SSB beam sent by the network side, which ensures an accuracy of the optimal SSB.

### BRIEF DESCRIPTION OF THE DRAWINGS

The above and/or other aspects and advantages of embodiments of the present disclosure will become apparent and more readily appreciated from the following descriptions made with reference to the accompanying drawings.
FIG. 1 is a flowchart of a method for determining a beam according to an embodiment of the present disclosure.
FIG. 2 is a flowchart of a method for determining a beam according to another embodiment of the present disclosure.
FIG. 3 is a flowchart of a method for determining a beam according to another embodiment of the present disclosure.
FIG. 4 is a flowchart of a method for determining a beam according to another embodiment of the present disclosure.
FIG. 5 is a flowchart of a method for determining a beam according to another embodiment of the present disclosure.
FIG. 6 is a flowchart of a method for determining a beam according to another embodiment of the present disclosure.
FIG. 7 is a flowchart of a method for determining a beam according to another embodiment of the present disclosure.
FIG. 8 is a flowchart of a method for determining a beam according to another embodiment of the present disclosure.
FIG. 9 is a flowchart of a method for determining a beam according to another embodiment of the present disclosure.
FIG. 10 is an interaction diagram of a method for determining a beam according to an embodiment of the present disclosure.
FIG. 11 is a block diagram of an apparatus for determining a beam according to an embodiment of the present disclosure.
FIG. 12 is a block diagram of an apparatus for determining a beam according to an embodiment of the present disclosure.
FIG. 13 is a block diagram of an apparatus for determining a beam according to an embodiment of the present disclosure.
FIG. 14 is a block diagram of an apparatus for determining a beam according to an embodiment of the present disclosure.
FIG. 15 is a block diagram of a communication apparatus according to an embodiment of the present disclosure.
FIG. 16 is a block diagram of a communication apparatus being a chip or a chip system according to an embodiment of the present disclosure.
FIG. 17 is a block diagram of a communication system according to an embodiment of the present disclosure.

### DETAILED DESCRIPTION

Reference are made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the embodiments of the present disclosure. Instead, those implementations are merely examples of apparatuses and methods consistent with some aspects of the embodiments of the present disclosure as recited in the appended claims.

The terms used in embodiments of the present disclosure are solely for the purpose of describing particular embodiments and are not intended to limit embodiments of the present disclosure. The terms "a/an" and "the" in a singular form used in embodiments and claims of the present disclosure are also intended to include a plural form, unless the context clearly indicates otherwise. It should also be understood that the term "and/or" as used herein refers to and includes any or all possible combinations of one or more associated listed items.

It should be understood that although terms such as first, second, third, etc. may be used to describe various types of information in the embodiments of the present disclosure, such information should not be limited to these terms. These terms are used only to distinguish different pieces of information of the same type from each other. For example, without departing from the scope of embodiments of the present disclosure, the first information may also be referred to as the second information, and similarly, the second information may be referred to as the first information. Depending on the context, words "if" and "in a case where/that" used here may be interpreted as "when", "while", or "in response to determining".

The embodiments of the present disclosure are described in detail below. Examples of the embodiments are shown in the accompanying drawings, throughout which the same or similar labels represent the same or similar elements or elements having the same or similar functions. The embodiments below with reference to the accompanying drawings are exemplary and are intended to explain the present disclosure, but should not be construed as a limitation to the present disclosure.

For convenience of understanding, terms involved in the present disclosure are introduced first.

### 1. Subband full duplex (SBFD)

Specifically, one carrier component (CC) on a downlink (DL) symbol or on a flexible (F) symbol is divided into a plurality of subbands (SBs) in a frequency domain. The plurality of SBs include one uplink (UL) subband and at least one (one or two) DL subband. The base station may send a DL signal on the DL subband while simultaneously receiving a UL signal on the UL subband. The DL symbol or the F symbol may be configured and implemented by at least one or more of following methods:
a time division duplexing (TDD)-UL-DL-ConfigCommon configuration,
a TDD-UL-DL-ConfigDedicated configuration,
the TDD-UL-DL-ConfigCommon configuration and the TDD-UL-DL-ConfigDedicated configuration, or,
a downlink control information format 2-0 (DCI format 2-0) indication.

One symbol including both the DL subband and the UL subband in the frequency domain may be referred to as an SBFD symbol. Similarly, when one time slot includes at least one SBFD symbol among a plurality of symbols of the one time slot may be referred to as an SBFD slot.

In some embodiments, when all symbols included in one time slot are the SBFD symbols, the one time slot may be referred to as the SBFD slot.

### 2. Synchronization signal/physical broadcast channel block (SSB)

The SSB consists of three parts: a primary synchronization signal (PSS), a secondary synchronization signal (SSS), and a physical broadcast channel (PBCH).

In some embodiments, an SSB transmission period may be 5, 10, 20, 40, 80, or 160 ms.

Within one SSB burst set period, a maximum number of SSB beams is related to a frequency band where the CC is located. The maximum numbers of SSB beams for a frequency band below 3GHz, a frequency band between 3GHz and 6GHz, and a frequency band above 6GHz are 4, 8, and 64, respectively. A number of SSB beams in one SSB burst set period may be understood as a number of SSB beams required to cover an entire cell. The SSB transmission period may be configured via a radio resource control (RRC) information element.

### 3. SBFD base station antenna configuration

In 3^{rd} generation partnership project (3GPP) radio access network wording group 1 (RAN1) #110 meeting, three solutions are proposed for antenna configuration of a base station supporting the SBFD, among which one antenna configuration (antenna configuration 1) is as follows.

For a DL time unit, K transmit radio frequency chains (Tx chains) are configured for DL transmission, for example, a transceiver unit (TxRU) group #1 and a TxRU group #2 each have K/2 Tx chains for the DL transmission. One chain may correspond to one or more antenna elements within an antenna panel (Panel) group. In the figure, one antenna panel is configured with L/2 antenna elements.

For an SBFD time unit, K/2 Tx chains are configured for the DL transmission, and K/2 receive radio frequency chains (Rx chains) are configured for UL reception.

For a UL time unit, K Rx chains are configured for the UL reception.

In some embodiments, when a user equipment (UE) in an idle state initially accesses a cell, the UE may select an optimal SSB by measuring information such as a received signal strength of an SSB beam. For an SBFD symbol and a non-SBFD symbol, a number of Tx chains used for DL transmission is different from a number of antenna elements used for DL transmission, which results in a difference in beam gain between the non-SBFD symbol and the SBFD symbol. Therefore, when SSB signals are configured on both the non-SBFD symbol and the SBFD symbol, the selection for the optimal SSB need to consider the difference in beam gain.

It may be understood that a communication system descripted in the embodiments of the present disclosure is intended to illustrate technical solutions of the embodiments of the present disclosure more clearly, and does not constitute limitations on the technical solutions of the embodiments of the present disclosure. Those skilled in the art may know that with the evolution of system architectures and the emergence of new service scenarios, the technical solutions in the embodiments of the present disclosure are also applicable to similar technical problems.

A method and an apparatus for determining a beam, a device, and a storage medium provided by the embodiments of the present disclosure are described in detail below with reference to accompanying drawings. The method may be applied to fifth generation (5G) mobile communication technology and subsequent communication technologies, such as 5G-advanced mobile communication technology and sixth generation (6G) mobile communication technology, which is not limited in the present disclosure.

### UE

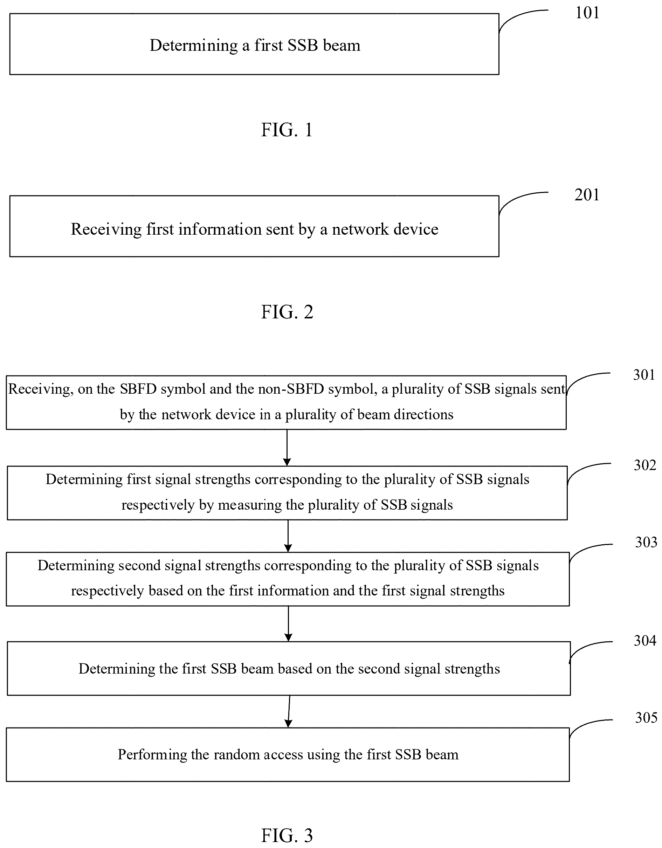

FIG. 1 is a flowchart of a method for determining a beam according to an embodiment of the present disclosure. The method is performed by a UE. As shown in FIG. 1, the method for determining a beam may include the following step.

At step 101, a first SSB beam is determined.

In some embodiments of the present disclosure, the first SSB beam is used for a random access. The first SSB beam may be understood as an optimal SSB beam. In other words, the first SSB beam may be a beam with optimal signal strength.

In some embodiments of the present disclosure, the SSB beam may be a beam for sending or receiving an SSB signal. In other words, for the UE, the SSB beam may be the beam used for receiving the SSB signal, and for the network device, the SSB beam may be a beam used for sending the SSB signal. In the embodiments of the present disclosure, the beam used for sending or receiving the SSB signal may be named an SSB beam or other names, which is not limited in the present disclosure.

In some embodiments of the present disclosure, the random access may refer to an initial access, that is, the first SSB beam may be used for the initial access. In some embodiments of the present disclosure, the first SSB beam may also be used for data transmission after the initial access, which is not limited in the present disclosure.

In some embodiments of the present disclosure, the UE may determine the first SSB beam by performing a signal measurement on a plurality of SSB signals. For example, the UE may receive a plurality of SSB signals sent by the network device in a plurality of directions. Each direction corresponds to one SSB signal. The UE may determine a signal strength of each SSB signal and determine a beam with a strongest signal strength as the first SSB beam. In some embodiments, the signal strength may be a relevant parameter representing strength of a communication signal.

In some embodiments, the plurality of SSB signals may be received on different types of time units, for example, on at least one of an SBFD symbol or a non-SBFD symbol, which is not limited in the present disclosure.

In summary, according to the method for determining a beam provided by the present disclosure, the method is performed by the UE and includes: determining the first SSB beam, in which the first SSB beam is used for the random access. The solution of the present disclosure achieves determination of the optimal SSB beam by determining the first SSB beam.

FIG. 2 is a flowchart of a method for determining a beam according to an embodiment of the present disclosure. The method is performed by a UE. As shown in FIG. 2, based on the embodiments shown in FIG. 1, the method for determining a beam may further include the following step.

At step 201, first information sent by a network device is received.

In some embodiments of the present disclosure, the first information may indicate a gain difference between an SBFD symbol and a non-SBFD symbol.

In some embodiments of the present disclosure, the first information may be configured to determine a first SSB beam, and the first SSB beam may be used for a random access. In other words, the first SSB beam may be understood as an optimal SSB beam, and the gain difference indicated by the first information may assist the UE in determining the optimal SSB beam for the random access.

In some embodiments of the present disclosure, the random access may refer to an initial access, that is, the first SSB beam may be used for the initial access. In some embodiments of the present disclosure, the first SSB beam may also be used for data transmission after the initial access, which is not limited in the present disclosure.

In some embodiments of the present disclosure, the first information may be a system information block 1 (SIB1) including a beam gain difference between the non-SBFD symbol and the SBFD symbol. In some embodiments, the SIB1 may carry relevant information for evaluating whether the UE is allowed to access a cell and may define scheduling of other system information.

In some embodiments of the present disclosure, the non-SBFD symbol includes at least one of a DL symbol or an F symbol.

In some embodiments of the present disclosure, the SSB may be configured only in one type of symbol category, for example, the SSB is configured only in the non-SBFD symbol or only in the SBFD symbol. In some embodiments, the SSB may also be configured in both the non-SBFD symbol and the SBFD symbol.

In some embodiments of the present disclosure, the first information may be sent and received between the network device and the UE by means of an explicit signaling. For example, the UE may receive a communication signaling sent by the network device, which carries the first information. A type of the communication signaling is not limited in the present disclosure.

In summary, according to the method for determining a beam provided by the present disclosure, the method is performed by the UE and includes: receiving the first information sent by the network device, in which the first information indicates the gain difference between the SBFD symbol and the non-SBFD symbol. The first information is used to determine the first SSB beam, in which the first SSB beam is used for the random access, and the non-SBFD symbol includes at least one of the DL symbol or the F symbol. In the solution of the present disclosure, the UE may receive the gain difference between the SBFD symbol and the non-SBFD symbol sent by a network side, and determine the optimal SSB beam in combination with the gain difference, which ensures an accuracy of an optimal SSB.

It should be understood that the above step 201 may be an optional step, and step 201 may be performed alone or in combination with step 101, which is not limited in the present disclosure.

It should be understood that the embodiments shown in FIG. 2 may be implemented alone or in combination with the embodiments shown in FIG. 1, which is not limited in the present disclosure.

FIG. 3 is a flowchart of a method for determining a beam according to an embodiment of the present disclosure. The method is performed by a UE. Based on the embodiments shown in FIG. 2, before or after performing step 201, the method for determining a beam may further include the following steps.

At step 301, on an SBFD symbol and an non-SBFD symbol, a plurality of SSB signals sent by a network device in a plurality of beam directions are received.

In some embodiments of the present disclosure, the UE receives, on the SBFD symbol and the non-SBFD symbol, the plurality of SSB signals sent by the network device in the plurality of beam directions, to determine signal strengths of the plurality of SSB signal in the plurality of directions. The plurality of beam directions may be different beam directions. For example, the plurality of SSB signals may be SSB #1 to SSB #8, that is, the network device sends the plurality of SSB signals to the UE in eight directions.

In some embodiments of the present disclosure, at least one first SSB signal among the plurality of SSB signals is on the SBFD symbol; and at least one second SSB signal among the plurality of SSB signals is on the non-SBFD symbol. The SBFD symbol refers to one or more SBFD symbols used for SSB transmission, and the non-SBFD symbol refers to one or more non-SBFD symbols used for SSB transmission.

In other words, the UE may receive the at least one first SSB signal among the plurality of SSB signals on the SBFD symbol; and receive the at least one second SSB signal among the plurality of SSB signals on the non-SBFD symbol.

At step 302, first signal strengths corresponding to the plurality of SSB signals respectively are determined by measuring the plurality of SSB signals.

In some embodiments of the present disclosure, the UE may determine the first signal strengths corresponding to the plurality of SSB signals respectively by measuring the plurality of SSB signals. A measurement method may be any method for measuring a reference signal, which will not be described in detail herein. In some embodiments of the present disclosure, the first signal strength may be a strength of the SSB signal received by the UE. For example, the first signal strength may be a reference signal receiving power (RSRP). The first signal strength may also be other parameters representing a signal strength, which is not limited in the present disclosure.

In some embodiments of the present disclosure, a first signal strength of an optimal SSB signal may not be the strongest among the first signal strengths of the plurality of SSB signals.

At step 303, second signal strengths corresponding to the plurality of SSB signals respectively are determined based on first information and the first signal strengths.

In some embodiments of the present disclosure, the UE determines the second signal strengths corresponding to the plurality of SSB signals according to according to a gain difference indicated in the first information and the first signal strengths obtained by measuring, to determine a first SSB beam among the plurality of SSB signals.

In some embodiments of the present disclosure, the second signal strength of the first SSB signal may be equal to the corresponding first signal strength.

In some embodiments of the present disclosure, the second signal strength of the second SSB signal may be equal to a sum of the corresponding first signal strength and the gain difference.

The above step 302 and step 303 are described in detail below with following examples.

In a possible embodiment, the gain difference indicated by the first information is δ=3 dB. SSB #1 to SSB #4 are SSB beams sent by the network device on the non-SBFD symbol, and SSB #5 to SSB #8 are SSB beams sent by the network device on the SBFD symbol. Values of first signal strength and the second signal strength of each SSB beam are shown in the following table.

| | SSB#1 | SSB#2 | SSB#3 | SSB#4 | SSB#5 | SSB#6 | SSB#7 | SSB#8 |
|---|---|---|---|---|---|---|---|---|
| RSRP_{i_0} (dB) | 2 | 4 | 5 | 6 | 4 | 3 | 2 | 1 |
| RSRP_{i_1} (dB) | 2 | 4 | 5 | 6 | 7 | 6 | 5 | 4 |

RSRP_{i_0} refers to the first signal strength, and RSRP _{i_1} refers to the second signal strength. The second signal strength may be determined by the corresponding first signal strength and the beam gain difference. For example, the second signal strength of SSB #5 to SSB #8 is respectively equal to a sum of the corresponding first signal strength and the gain difference δ. The second signal strength of SSB #1 to SSB #4 is respectively equal to the corresponding first signal strength.

At step 304, the first SSB beam is determined based on the second signal strengths.

In some embodiments of the present disclosure, the UE determines the first SSB beam for sending a random signal to the network device.

In some embodiments of the present disclosure, a beam direction corresponding to an SSB signal with a maximum second signal strength may be determined as the first SSB beam.

In the above embodiments, it may be seen from the table that SSB #5 is the SSB signal with the maximum second signal strength, therefore the beam corresponding to the SSB #5 signal is the first SSB beam.

At step 305, the random access is performed using the first SSB beam.

In some embodiments of the present disclosure, the UE may perform the random access using the first SSB beam to establish a connection between the UE and the network device. In some embodiments, the UE may also perform, using the first SSB beam, data transmission after the random access.

In the above embodiment, the beam corresponding to the SSB #5 signal may be used for a random signal access, which realizes an interaction between the UE and the network device.

In summary, according to the method for determining a beam provided by the present disclosure, the method is performed by the UE and includes: receiving, on the SBFD symbol and the non-SBFD symbol, the plurality of SSB signals sent by the network device in the plurality of beam directions; determining the first signal strengths corresponding to the plurality of SSB signals respectively by measuring the plurality of SSB signals; determining the second signal strengths corresponding to the plurality of SSB signals respectively based on the first information and the first signal strengths; determining the first SSB beam based on the second signal strengths; and performing the random access using the first SSB beam. In the solution of the present disclosure, the UE may receive the gain difference between the SBFD symbol and the non-SBFD symbol sent by a network side, and determine the optimal SSB beam in combination with the gain difference, which ensures an accuracy of an optimal SSB.

It should be understood that the above step 301 to step 305 may be optional steps, and step 301 to step 305 may be performed independently or in combination with each other, which is not limited in the present disclosure.

It should be understood that the embodiments shown in FIG. 3 may be performed independently or in combination with the embodiments shown in FIG. 1 and FIG. 2, which is not limited in the present disclosure.

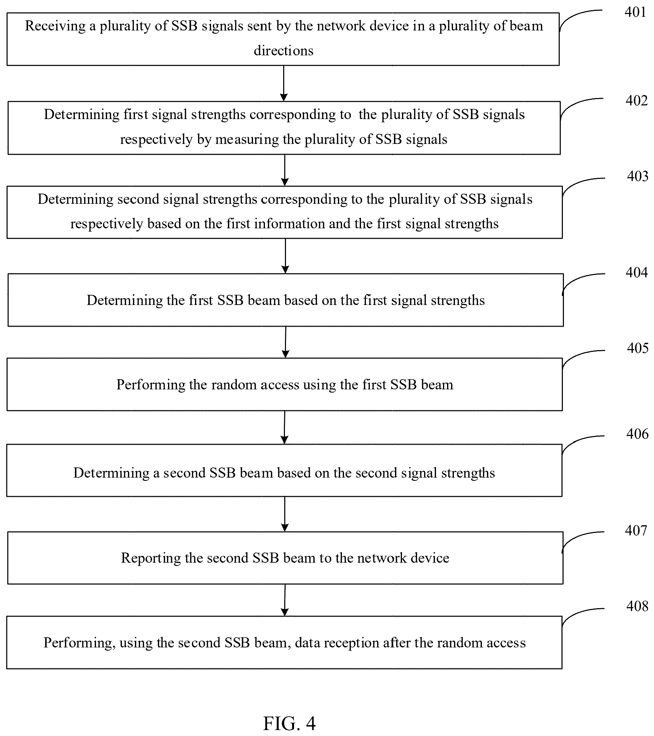

FIG. 4 is a flowchart of a method for determining a beam according to an embodiment of the present disclosure. The method is performed by a UE. Based on the above embodiments, before or after performing step 201, the method for determining a beam may include the following steps.

At step 401, a plurality of SSB signals sent by a network device in a plurality of beam directions are received.

It should be understood that the UE may receive the plurality of SSB signals sent by the network device in the plurality of beam directions on an SBFD symbol, may receive the plurality of SSB signals sent by the network device in the plurality of beam directions on an non-SBFD symbol, or may receive the plurality of SSB signals sent by the network device in the plurality of beam directions on both the SBFD symbol and the non-SBFD symbol.

At step 402, first signal strengths corresponding to the plurality of SSB signals respectively are determined by measuring the plurality of SSB signals.

At step 403, second signal strengths corresponding to the plurality of SSB signals respectively are determined based on first information and the first signal strengths.

In the present disclosure, principles of step 401 to step 403 are the same as principles of step 301 to step 303 in the embodiments shown in FIG. 3 above. Reference may be made to the relevant description in the above embodiments, and details are not repeated here.

At step 404, the first SSB beam is determined based on the first signal strengths.

In some embodiments of the present disclosure, the UE may determine the first SSB beam based on the first signal strengths, to perform a random access.

In some embodiments of the present disclosure, a beam direction corresponding to an SSB signal with a maximum first signal strength is determined as the first SSB beam.

In the above embodiments, the first signal strength of SSB #4 signal is the maximum first signal strength, and the beam direction corresponding to this SSB signal may be determined as the first SSB beam.

At step 405, the random access is performed using the first SSB beam.

In some embodiments of the present disclosure, the random access is performed using the first SSB beam to establish a connection between the UE and the network device.

In the above embodiment, the beam corresponding to SSB #4 signal may be used for a random signal access, which realizes an interaction between the UE and the network device.

In other words, the UE may use the first signal strengths to select the SSB beam for the random access. This SSB beam may not be an optimal SSB beam, that is, the SSB beam may be an optimal SSB beam selected without considering a gain difference, thus ensuring that a random access process proceeds in a manner known to the network device and avoiding potential issues that might occur in the random access process.

At step 406, a second SSB beam is determined based on the second signal strengths.

In some embodiments of the present disclosure, the UE determines the second SSB beam to determine a beam used for data reception after the random access.

In some embodiments of the present disclosure, the UE may determine a beam direction corresponding to an SSB signal with a maximum second signal strength as the second SSB beam. For example, in the above embodiment, the second signal strength of SSB #5 signal is the maximum second signal strength, and the beam direction corresponding to this SSB signal may be determined as the second SSB beam.

At step 407, the second SSB beam is reported to the network device.

In some embodiments of the present disclosure, the UE may report the second SSB beam to the network device, causing the network device to use the second SSB beam for performing data transmission after the random access.

In some embodiments of the present disclosure, the UE may report the second SSB beam to the network device by sending an RRC signaling, but it is not limited thereto. Other methods capable of reporting the second SSB beam to the network device all fall within the scope of the present disclosure.

At step 408, data reception after the random access is performed using the second SSB beam.

In some embodiments of the present disclosure, the UE, using the second SSB beam, performs the data reception after the random access to achieve a selection and use of the optimal SSB beam.

In other words, in this embodiment, the UE may select the SSB beam for the random access based on a signal strength without considering the gain difference, and perform the data transmission after the random access based on a signal strength considering the gain difference.

In the above embodiment, the beam corresponding to the SSB #5 signal is determined as the second SSB beam, and this beam is used for the data reception after the random access.

In the embodiments of the present disclosure, the above step 406 to step 408 may be optional steps.

In summary, according to the method for determining a beam provided by the present disclosure, the method is performed by the UE and includes: receiving the plurality of SSB signals sent by the network device in the plurality of beam directions; determining the first signal strengths corresponding to the plurality of SSB signals respectively by measuring the plurality of SSB signals; determining the second signal strengths corresponding to the plurality of SSB signals respectively based on the first information and the first signal strengths; determining the first SSB beam based on the first signal strengths; performing the random access using the first SSB beam; determining the second SSB beam based on the second signal strengths; reporting the second SSB beam to the network device; and performing, using the second SSB beam, the data reception after the random access. In the solution of the present disclosure, the UE may receive the gain difference between the SBFD symbol and the non-SBFD symbol sent by a network side, and determine the optimal SSB beam in combination with the gain difference, which ensures an accuracy of an optimal SSB. Furthermore, the UE may determine the optimal SSB beam for the random access and the optimal SSB beam for the data transmission after the random access according to different strategies, which enhances the stability and reliability of communication.

It should be understood that the above step 401 to step 408 may be optional steps, and step 401 to step 408 may be performed independently or in combination with each other, which is not limited in the present disclosure.

It should be understood that the embodiments shown in FIG. 4 may be performed independently or in combination with the embodiments shown in FIG. 1, FIG. 2, and FIG. 3, which is not limited in the present disclosure.

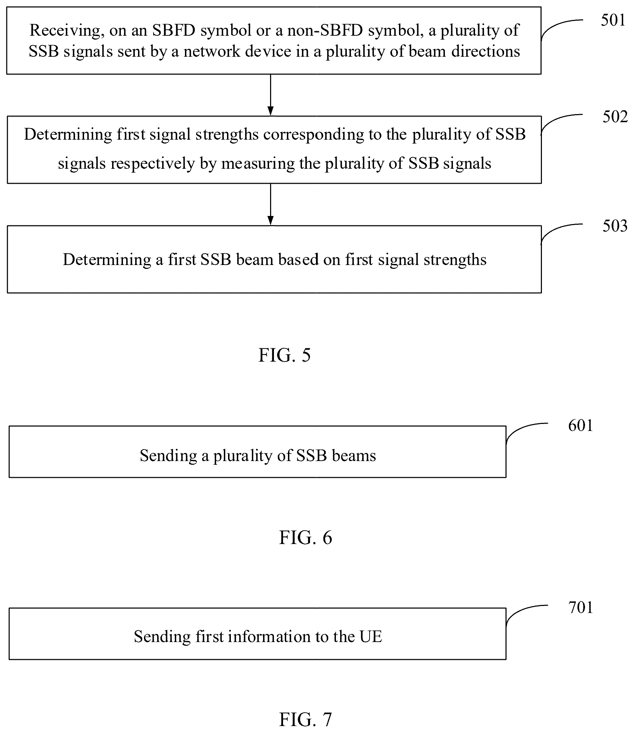

FIG. 5 is a flowchart of a method for determining a beam according to an embodiment of the present disclosure. The method is performed by a UE. Based on the above embodiments, the method for determining a beam may further include the following steps.

At step 501, a plurality of SSB signals sent by a network device in a plurality of beam directions are received on an SBFD symbol or a non-SBFD symbol.

In some embodiments of the present disclosure, the UE receives, on the SBFD symbol or the non-SBFD symbol, the plurality of SSB signals sent by the network device in the plurality of beam directions. In other words, this solution restricts a time-domain location where the network device sends the SSB signal, which causes the SSB signal to be sent within a same symbol type, and thus avoids an impact of the beam gain difference between the non-SBFD symbol and the SBFD symbol on a selection of the optimal SSB beam.

In some embodiments of the present disclosure, the non-SBFD symbol includes at least one of a DL symbol or an F symbol.

In some embodiments of the present disclosure, the SSB may be configured only in one type of symbol category, for example, the SSB is configured only in the non-SBFD symbol or configured only in the SBFD symbol.

**At** step 502, first signal strengths corresponding to the plurality of SSB signals respectively are determined by measuring the plurality of SSB signals

At step 503, a first SSB beam is determined based on first signal strengths.

Specifically, the network device determines a beam direction corresponding to an SSB signal with a maximum first signal strength as the first SSB beam.

In the present disclosure, a principle of step 502 is the same as a principle of step 302 above, and a principle of step 503 is the same as a principle of step 404 above. Reference may be made to the relevant descriptions in the above embodiments, which will not be repeated here.

In summary, according to the method for determining a beam provided by the present disclosure, the method is performed by the UE and includes: receiving, on the SBFD symbol or the non-SBFD symbol, the plurality of SSB signals sent by the network device in the plurality of beam directions; determining the first signal strengths corresponding to the plurality of SSB signals respectively by measuring the plurality of SSB signals; and determining the first SSB beam based on the first signal strengths. In the solution of the present disclosure, by restricting the time-domain location of the SSB transmission, the SSB signal is sent within the same symbol type, which avoids the impact of the beam gain difference between the non-SBFD symbol and the SBFD symbol on the selection of the optimal SSB beam. By determining the strengths of the plurality of SSB signals, the optimal SSB beam for the random access is determined, which achieves determination of the optimal SSB beam.

It should be understood that the above step 501 to step 503 may be optional steps, and step 501 to step 503 may be performed independently or in combination with each other, which is not limited in the present disclosure.

It should be understood that the embodiment shown in FIG. 5 may be performed independently or in combination with the embodiments shown in FIG. 1 to FIG. 4, which is not limited in the present disclosure.

### Network device

FIG. 6 is a flowchart of a method for determining a beam according to an embodiment of the present disclosure. The method is performed by a network device and includes the following step.

At step 601, a plurality of SSB beams are sent.

**In** some embodiments of the present disclosure, the plurality of SSB beams include a first SSB beam, and the first SSB beam is used for a random access and determined by a UE.

**In** some embodiments of the present disclosure, sending the plurality of SSB beams may include: sending, on an SBFD symbol or on a non-SBFD symbol, a plurality of SSB signals to the UE in a plurality of beam directions.

In summary, according to the method for determining a beam provided by the present disclosure, the method is performed by the network device and includes: sending the plurality of SSB beams, to enable the UE to determine the first SSB beam, thus achieving determination of an optimal SSB beam.

FIG. 7 is a flowchart of a method for determining a beam according to an embodiment of the present disclosure. The method is performed by a network device. Based on the embodiments shown in FIG. 6, the method for determining a beam may further include the following step.

At step 701, first information is sent to the UE.

In some embodiments of the present disclosure, the network device sends the first information to the UE to enable the network device to obtain a beam gain difference between a non-SBFD symbol and an SBFD symbol.

In some embodiments of the present disclosure, the first information indicates a gain difference between the SBFD symbol and the non-SBFD symbol, and determines a first SSB beam, in which the first SSB beam is used for a random access.

In some embodiments of the present disclosure, the non-SBFD symbol includes at least one of a DL symbol or an F symbol.

In the present disclosure, a principle of step 701 is the same as a principle of step 201 above. Reference may be made to the relevant descriptions in the above embodiments, and details are not repeated here.

In summary, according to the method for determining a beam provided by the present disclosure, the method is performed by the network device and includes: sending the first information, in which the first information indicates the gain difference between the SBFD symbol and the non-SBFD symbol and is used to determine the first SSB beam. The first SSB beam is used for the random access, and the non-SBFD symbol includes at least one of the DL symbol or the F symbol. In the solution of the present disclosure, the first information is sent to enable the UE to determine the SSB beam gain, which lays a foundation for determining the optimal SSB beam.

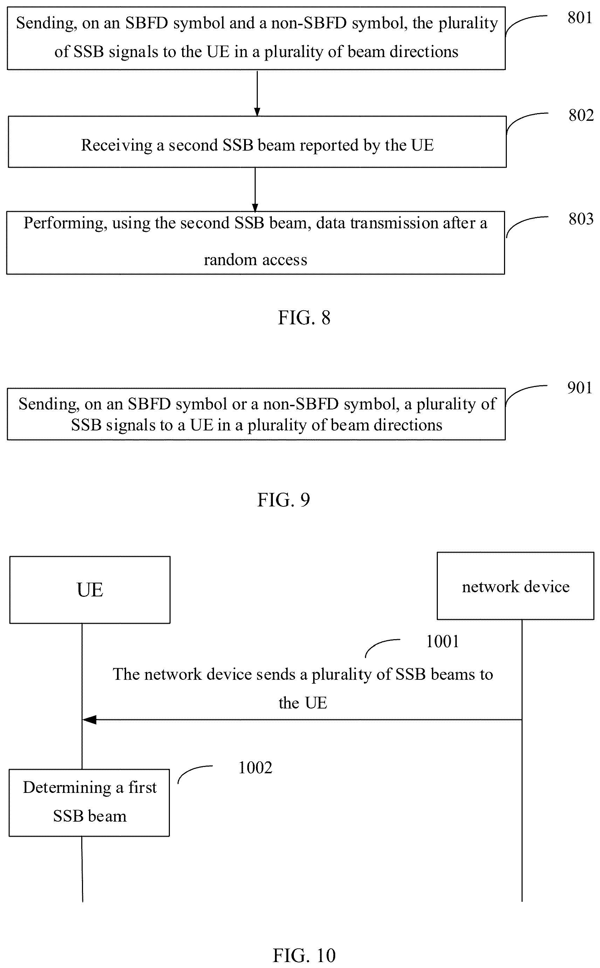

FIG. 8 is a flowchart of a method for determining a beam according to an embodiment of the present disclosure. The method is performed by a network device. Based on the embodiments described in FIG. 7, step 701 is described in detail. The method for determining a beam may include the following steps.

At step 801, on an SBFD symbol and a non-SBFD symbol, a plurality of SSB signals are sent to a UE in a plurality of beam directions.

In some embodiments of the present disclosure, the network device sends, on the SBFD symbol and the non-SBFD symbol, the plurality of SSB signals to the UE in the plurality of beam directions, to enable the UE to determine signal strengths of the plurality of SSB signals.

**In** some embodiments of the present disclosure, at least one first SSB signal among the plurality of SSB signals is sent on a first SBFD symbol, and at least one second SSB signal among the plurality of SSB signals is sent on a first non-SBFD symbol.

In other words, the network device may send the at least one first SSB signal among the plurality of SSB signals to the UE on the SBFD symbol; and send the at least one second SSB signal among the plurality of SSB signals to the UE on the non-SBFD symbol.

At step 802, a second SSB beam reported by the UE is received.

In some embodiments of the present disclosure, the network device receives the second SSB beam reported by the UE, to use the beam for data transmission after a random access.

In some embodiments of the present disclosure, the second SSB beam is a beam direction corresponding to an SSB signal with a maximum second signal strength determined by the UE, a second signal strength is determined by the UE based on the first information and a first signal strength, and the first signal strength is obtained by the UE by measuring the plurality of SSB signals.

Specifically, the at least one first SSB signal among the plurality of SSB signals is sent on the SBFD symbol, and the second signal strength of the first SSB signal is equal to the corresponding first signal strength. The at least one second SSB signals among the plurality of SSB signals are sent on the non-SBFD symbol, and the second signal strength of the second SSB signal is equal to a sum of the corresponding first signal strength and the gain difference.

At step 803, data transmission after a random access is performed using the second SSB beam.

In some embodiments of the present disclosure, the network device uses the second SSB beam to perform the data transmission after the random access to achieve a selection and use of an optimal SSB beam.

In the present disclosure, principles of step 801 to step 803 are the same as principles of related steps in the embodiments shown in FIG. 4 above. Reference may be made to the relevant descriptions in the above embodiments, and details are not repeated here.

In summary, according to the method for determining a beam of the present disclosure, the method is performed by the network device and includes: sending, on the SBFD symbol and the non-SBFD symbol, the plurality of SSB signals to the UE in the plurality of beam directions; receiving the second SSB beam reported by the UE; and performing, using the second SSB beam, the data transmission after the random access. In the solution of the present disclosure, by sending the plurality of SSB signals to the UE, the UE obtains a strength of each signal. By receiving the second SSB beam reported by the UE, the optimal SSB beam is determined, and the optimal SSB beam is used for the data transmission after the random access.

FIG. 9 is a flowchart of a method for determining a beam according to an embodiment of the present disclosure. The method is performed by a network device. Based on the embodiments described in FIG. 7, step 701 is described in detail. The method for determining a beam may include the following step.

At step 901, on an SBFD symbol or a non-SBFD symbol, a plurality of SSB signals are sent to a UE in a plurality of beam directions.

In some embodiments of the present disclosure, the network device sends, on the SBFD symbol or the non-SBFD symbol, the plurality of SSB signals to the UE in the plurality of beam directions. By restricting a time-domain location of the SSB signal transmission, the SSB signal is sent within a same symbol type, which avoids an impact of the beam gain difference between the non-SBFD symbol and the SBFD symbol on a selection of an optimal SSB beam.

In summary, according to the method for determining a beam provided by the present disclosure, the method is performed by a network device and includes: sending, on the SBFD symbol and the non-SBFD symbol, the plurality of SSB signals to the UE in the plurality of beam directions. By restricting the time-domain location of the SSB signal transmission, the solution of the present disclosure makes the SSB signal send within the same symbol type, which avoids the impact of the beam gain difference between the non-SBFD symbol and the SBFD symbol on the selection of the optimal SSB beam and achieves determination of the optimal SSB beam.

FIG. 10 is an interaction diagram of a method for determining a beam according to an embodiment of the present disclosure. The method may be performed by a UE and a network device. As shown in FIG. 10, an interaction method may include following steps at step 1001 to step 1002.

At step 1001, the network device sends a plurality of SSB beams to the UE.

The plurality of SSB beams include a first SSB beam, and the first SSB beam is used for a random access and determined by the UE.

A principle of step 1001 is the same as a principle of various steps in the embodiments shown in FIG. 6 above. Reference may be made to the relevant descriptions of FIG. 6, and details are not repeated here.

At step 1002, the UE determines a first SSB beam.

The first SSB beam is used for the random access.

A principle of step 1002 is the same as a principle of various steps in the embodiments shown in FIG. 1 above. Reference may be made to the relevant descriptions of FIG. 1, and details are not repeated here.

In summary, according to the method for determining a beam provided by the present disclosure, via an interaction between the network device and the UE, the network device sends the plurality of SSB beams to the UE, in which the plurality of SSB beams include the first SSB beam, and the first SSB beam is used for the random access and determined by the UE; and the UE determines the first SSB beam, which enables the UE to determine the first SSB beam and achieves determination of an optimal SSB beam.

Corresponding to the method for determining a beam in the above embodiments, the present disclosure also provides an apparatus for determining a beam. Since the apparatus for determining a beam provided by the embodiments of the present disclosure corresponds to the method for determining a beam provided in the above several embodiments, implementations of the method for determining a beam is also applicable to the apparatus for determining a beam provided in the embodiment, which will not be described in detail in this embodiment.

### Apparatus

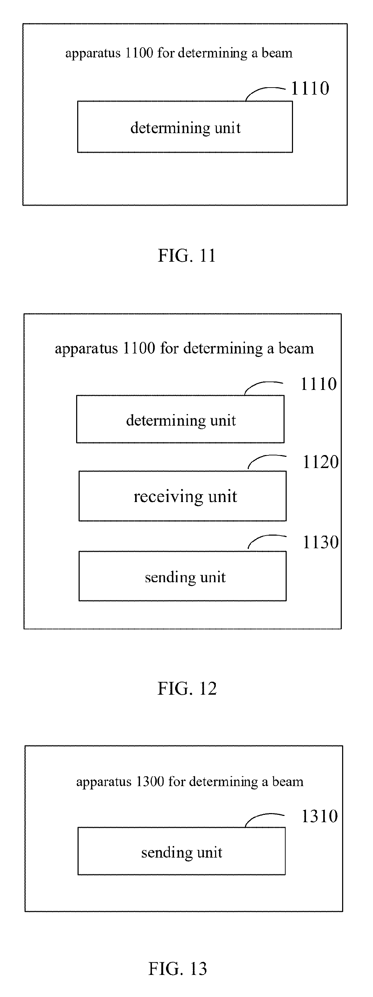

FIG. 11 is a block diagram of an apparatus 1100 for determining a beam according to an embodiment of the present disclosure. The apparatus is configured in a UE.

As shown in FIG. 11, the apparatus 1100 may include a determining unit 1110, configured to determine a first SSB beam, in which the first SSB beam is used for a random access.

In summary, according to the apparatus for determining a beam provided by the embodiments of the present disclosure, the apparatus is configured in the UE, and its determining unit is configured to determine the first SSB beam, in which the first SSB beam is used for the random access, which achieves determination of the first SSB beam, i.e., an optimal SSB beam.

In some embodiments of the present disclosure, the apparatus 1100 for determining a beam further includes a receiving unit 1120, configured to: receive first information sent by a network device, in which the first information indicates a gain difference between an SBFD symbol and a non-SBFD symbol, and the non-SBFD symbol includes at least one of a DL symbol or an F symbol.

In some embodiments of the present disclosure, the receiving unit 1120 is further configured to: receive, on the SBFD symbol and the non-SBFD symbol, a plurality of SSB signals sent by the network device in a plurality of beam directions; and the determining unit 1110 is configured to: determine first signal strengths corresponding to the plurality of SSB signals respectively by measuring the plurality of SSB signals; and determine second signal strengths corresponding to the plurality of SSB signals respectively based on the first information and the first signal strengths.

In some embodiments of the present disclosure, the receiving unit 1120 is further configured to: receive at least one first SSB signal among the plurality of SSB signals on the SBFD symbol; and receive at least one second SSB signal among the plurality of SSB signals on the non-SBFD symbol.

In some embodiments of the present disclosure, the determining unit 1110 is further configured to: determine the first SSB beam based on the second signal strengths.

In some embodiments of the present disclosure, the apparatus 1100 for determining a beam further includes a sending unit 1130, configured to perform the random access using the first SSB beam.

In some embodiments of the present disclosure, the determining unit 1110 is further configured to: determine a beam direction corresponding to an SSB signal with a maximum second signal strength as the first SSB beam.

In some embodiments of the present disclosure, the sending unit 1130 is further configured to: perform the random access using the first SSB beam.

In some embodiments of the present disclosure, the determining unit 1110 is further configured to: determine a beam direction corresponding to an SSB signal with a maximum first signal strength as the first SSB beam.

In some embodiments of the present disclosure, the determining unit 1110 is further configured to: determine a second SSB beam based on the second signal strengths.

In some embodiments of the present disclosure, the sending unit 1130 is further configured to: report the second SSB beam to the network device.

In some embodiments of the present disclosure, the receiving unit 1120 is further configured to: perform, using the second SSB beam, data reception after the random access.

In some embodiments of the present disclosure, the determining unit 1110 is further configured to: determine a beam direction corresponding to an SSB signal with a maximum second signal strength as the second SSB beam.

In some embodiments of the present disclosure, the determining unit 1110 is further configured to: determine the second signal strength of the first SSB signal as the first signal strength; and determine the second signal strength of the second SSB signal as a sum of the first signal strength and the gain difference.

In some embodiments of the present disclosure, the receiving unit 1120 is further configured to: receive, on an SBFD symbol or a non-SBFD symbol, a plurality of SSB signals sent by a network device in a plurality of beam directions.

In some embodiments of the present disclosure, the determining unit 1110 is further configured to: determine first signal strengths corresponding to the plurality of SSB signals respectively by measuring the plurality of SSB signals.

In some embodiments of the present disclosure, the determining unit 1110 is further configured to: determine the first SSB beam based on the first signal strengths.

In some embodiments of the present disclosure, the determining unit 1110 is further configured to: determine a beam direction corresponding to an SSB signal with a maximum first signal strength as the first SSB beam.

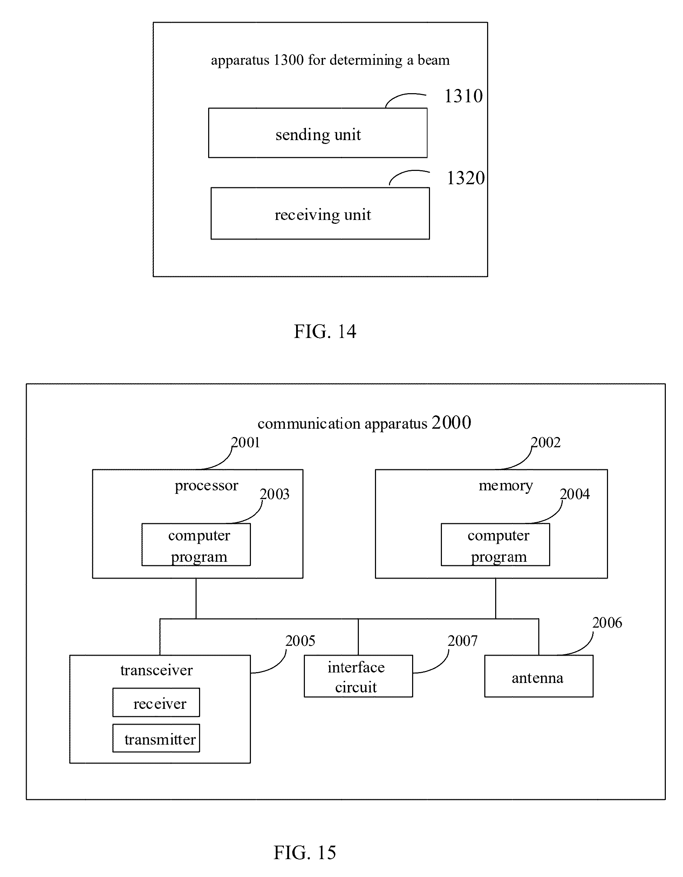

FIG. 13 is a block diagram of an apparatus 1300 for determining a beam according to an embodiment of the present disclosure. The apparatus is configured in a network device.

As shown in FIG. 13, the apparatus 1300 may include a sending unit 1310, configured to: send a plurality of SSB beams.

The plurality of SSB beams include a first SSB beam, and the first SSB beam is used for a random access and determined by a UE.

In summary, according to the apparatus for determining a beam provided by the embodiments of the present disclosure, the apparatus is configured in the network device, and its sending unit is configured to send the plurality of SSB beams, in which the plurality of SSB beams include the first SSB beam, and the first SSB beam is used for the random access and determined by the UE, to enable the UE to determine the first SSB beam.

In some embodiments of the present disclosure, the sending unit 1310 is further configured to: send first information to the UE, in which the first information indicates a gain difference between an SBFD symbol and a non-SBFD symbol, and the non-SBFD symbol includes at least one of a DL symbol or an F symbol.

In some embodiments of the present disclosure, the sending unit 1310 is further configured to: send, on the SBFD symbol and the non-SBFD symbol, a plurality of SSB signals to the UE in a plurality of beam directions.

In some embodiments of the present disclosure, the sending unit 1310 is further configured to: send at least one first SSB signal among the plurality of SSB signals to the UE on the SBFD symbol, in which a second signal strength of the first SSB signal is equal to a first signal strength; and send at least one second SSB signal among the plurality of SSB signals to the UE on the non-SBFD symbol, in which a second signal strength of the second SSB signal is equal to a sum of the first signal strength and the gain difference.

In some embodiments of the present disclosure, the apparatus 1300 for determining a beam further includes a receiving unit 1320, configured to: receive a second SSB beam reported by the UE.

In some embodiments of the present disclosure, the sending unit 1310 is further configured to: perform, using the second SSB, data transmission after the random access.

Please refer to FIG. 15, FIG. 15 is a block diagram of a communication apparatus 2000 according to an embodiment of the present disclosure. The communication apparatus 2000 may be a network device, or a terminal, or a chip, a chip system, a processor, etc. that supports the network device to implement the method, or a chip, a chip system, a processor, etc. that supports the terminal to implement the method. The communication apparatus 2000 is configured to implement the method in the above method embodiments. For details, please refer to the description in the above method embodiments.

The communication apparatus 2000 may include one or more processors 2001. The processor 2001 may be a general-purpose processor or a special-purpose processor. For example, it may be a baseband processor or a central processing unit. The baseband processor is configured to process communication protocols and communication data, and the central processor is configured to control communication apparatuses (such as base stations, baseband chips, terminals, terminal chips, DU or CU, etc.) to execute computer programs and process computer program data.

In some embodiments, the communication apparatus 2000 may also include one or more memories 2002 on which a computer program 2004 is stored. When the computer program 2004 is executed by the processor 2001, the communication apparatus 2000 implements the method in the above method embodiments. Optionally, the memory 2002 may also store data. The communication apparatus 2000 and the memory 2002 may be set separately or integrated together.

In some embodiments, the communication apparatus 2000 may also include a transceiver 2005 and an antenna 2006. The transceiver 2005 may be called a transceiving unit, a transceiving machine, or a transceiving circuit, etc., to achieve a transceiving function. The transceiver 2005 may include a receiver and a transmitter. The receiver may be called a receiver or a receiving circuit, etc., to achieve a receiving function; and the transmitter may be called a transmitter or a transmitting circuit, etc., to achieve a transmitting function.

In some embodiments, the communication apparatus 2000 includes one or more interface circuits 2007. The interface circuit 2007 is configured to receive code instructions and transmit the code instructions to the processor 2001. When the code instructions are running on the processor 2001, the communication apparatus 2000 is caused to implement the method in the above method embodiments.

In an implementation, the processor 2001 may include a transceiver configured to achieve the receiving and transmitting function. For example, the transceiver may be a transceiving circuit, or an interface, or an interface circuit. The transceiving circuit, the interface, or the interface circuit configured to achieve the receiving and transmitting function may be set separately or integrated together. The transceiving circuit, the interface or the interface circuit may be configured to read and write code/data, or the transceiving circuit, the interface or the interface circuit may be configured to transmit or convey signals.

In an implementation, the processor 2001 may store a computer program 2003. When the computer program 2003 is running on the processor 2001, the communication apparatus 2000 is caused to implement the method in the above method embodiments. The computer program 2003 may be solidified in the processor 2001. In this way, the processor 2001 may be implemented in hardware.

In an implementation, the communication apparatus 2000 may include a circuit that may achieve the transmitting or receiving or communicating function in the above method embodiments. The processor and transceiver in the present disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus in the above embodiments may be a network device or a terminal, but the scope of the communication apparatus in the present disclosure is not limited to this, and the structure of the communication apparatus may not be restricted by FIG. 15. The communication apparatus may be an independent device or part of a larger device. For example, the communication apparatus may be:
(1) an independent IC, or a chip, or a chip system or a subsystem;
(2) a collection including one or more IC, in some embodiments, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

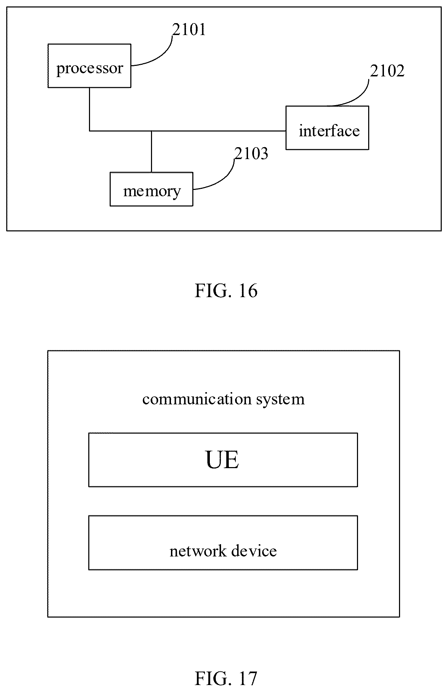

For the case where the communication apparatus may be a chip or a chip system, please refer to the block diagram of a chip shown in FIG. 16. The chip in FIG. 16 includes a processor 2101 and an interface 2102. There may be one or more processors 2101, and there may be one or more interfaces 2102.

In some embodiments, the chip further includes a memory 2103 for storing necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

The present disclosure also provides a readable storage medium for storing instructions. When the instructions are executed by a computer, functions of any one of the above method embodiments are performed.

The present disclosure also provides a computer program product. When the computer program product is executed by a computer, functions of any one of the above method embodiments are performed.

FIG. 17 is a block diagram of a communication system according to an embodiment of the present disclosure. As shown in FIG. 17, the communication system includes: a UE configured to implement the method shown in FIG. 1 to FIG. 5 above; and a network device configured to implement the method shown in FIG. 6 to FIG. 9 above.

The present disclosure provides a method for determining a beam, performed by a UE. The method includes: determining a first SSB beam, in which the first SSB beam is used for a random access.

In some embodiments, the method further includes: receiving first information sent by a network device, in which the first information indicates a gain difference between an SBFD symbol and a non-SBFD symbol, and the non-SBFD symbol includes at least one of a DL symbol or an F symbol.

In some embodiments, the method further includes: receiving, on the SBFD symbol and the non-SBFD symbol, a plurality of SSB signals sent by the network device in a plurality of beam directions; determining first signal strengths corresponding to the plurality of SSB signals respectively by measuring the plurality of SSB signals; and determining second signal strengths corresponding to the plurality of SSB signals respectively based on the first information and the first signal strengths.

In some embodiments, receiving, on the SBFD symbol and the non-SBFD symbol, the plurality of SSB signals sent by the network device in the plurality of beam directions includes: receiving at least one first SSB signal among the plurality of SSB signals on the SBFD symbol; and receiving at least one second SSB signal among the plurality of SSB signals on the non-SBFD symbol.

In some embodiments, determining the first SSB beam includes: determining the first SSB beam based on the second signal strengths; and performing the random access using the first SSB beam.

In some embodiments, determining the first SSB beam based on the second signal strength includes: determining a beam direction corresponding to an SSB signal with a maximum second signal strength as the first SSB beam.

In some embodiments, determining the first SSB beam includes: determining the first SSB beam based on the first signal strengths; and performing the random access using the first SSB beam.

In some embodiments, determining the first SSB beam based on the first signal strength includes: determining a beam direction corresponding to an SSB signal with a maximum first signal strength as the first SSB beam.

In some embodiments, the method further includes: determining a second SSB beam based on the second signal strengths; reporting the second SSB beam to the network device; and performing, using the second SSB beam, data reception after the random access.

In some embodiments, determining the second SSB beam based on the second signal strength includes: determining a beam direction corresponding to an SSB signal with a maximum second signal strength as the second SSB beam.

In some embodiments, determining the second signal strengths of the plurality of SSB signals based on the first information and the first signal strengths includes: determining the second signal strength of the first SSB signal as the first signal strength; and determining the second signal strength of the second SSB signal as a sum of the first signal strength and the gain difference.

In some embodiments, the method includes: receiving, on an SBFD symbol or a non-SBFD symbol, a plurality of SSB signals sent by a network device in a plurality of beam directions; and determining first signal strengths corresponding to the plurality of SSB signals respectively by measuring the plurality of SSB signals.

In some embodiments, determining the first SSB beam includes: determining the first SSB beam based on the first signal strengths.

In some embodiments, determining the first SSB beam based on the first signal strength includes: determining a beam direction corresponding to an SSB signal with a maximum first signal strength as the first SSB beam.

The present disclosure provides a method for determining a beam, performed by a network device. The method includes: sending a plurality of SSB beams, in which the plurality of SSB beams include a first SSB beam, and the first SSB beam is used for a random access and determined by a UE.

In some embodiments, the method further includes: sending first information to the UE, in which the first information indicates a gain difference between an SBFD symbol and a non-SBFD symbol, and the non-SBFD symbol includes at least one of a DL symbol or an F symbol.

In some embodiments, sending the plurality of SSB beams includes: sending, on the SBFD symbol and the non-SBFD symbol, a plurality of SSB signals to the UE in a plurality of beam directions.

In some embodiments, sending, on the SBFD symbol and the non-SBFD symbol, the plurality of SSB signals to the UE in the plurality of beam directions includes: sending at least one first SSB signal among the plurality of SSB signals to the UE on the SBFD symbol; and sending at least one second SSB signal among the plurality of SSB signals to the UE on the non-SBFD symbol.

In some embodiments, the method further includes: receiving a second SSB beam reported by the UE; and performing, using the second SSB, data transmission after the random access.

In some embodiments, the second SSB beam is a beam direction corresponding to an SSB signal with a maximum second signal strength determined by the UE, a second signal strength is determined by the UE based on the first information and a first signal strength, and the first signal strength is obtained by the UE by measuring the plurality of SSB signals.

In some embodiments, the second signal strength of the first SSB signal is equal to the first signal strength; and the second signal strength of the second SSB signal is equal to a sum of the first signal strength and the gain difference.

In some embodiments, sending the plurality of SSB beams includes: sending, on an SBFD symbol or a non-SBFD symbol, a plurality of SSB signals to the UE in a plurality of beam directions.

The present disclosure provides an apparatus for determining a beam, configured in a UE. The apparatus includes: a determining unit, configured to determine a first SSB beam, in which the first SSB beam is used for a random access.

The present disclosure provides an apparatus for determining a beam, configured in a network device. The apparatus includes: a sending unit, configured to send a plurality of SSB beams, in which the plurality of SSB beams include a first SSB beam, and the first SSB beam is used for a random access and determined by a UE.

The present disclosure provides a communication apparatus, including a processor and a memory for storing a computer program. When the computer program stored in the memory is executed by the processor, the device is caused to implement the method embodiments described in the present disclosure.

The present disclosure provides a communication apparatus, including a processor and an interface circuit. The interface circuit is configured to receive code instructions and transmit the code instructions to the processor; and the processor is configured to run the code instructions to implement the method embodiments described in the present disclosure.

The present disclosure provides a computer-readable storage medium for storing instructions. When the instructions are executed, the method embodiments described in the present disclosure are implemented.

The present disclosure provides a communication system, including a UE and a network device. The UE is configured to implement the method embodiments described in FIG. 1 to FIG. 5, and the network device is configured to implement the method embodiments described in FIG. 6 to FIG. 9.

In the present disclosure, each embodiment may be implemented independently or in combination with each other, which is not limited in the present disclosure.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the present disclosure are distinguished merely for convenience of description, and are not intended to limit the scope of embodiments of the present disclosure, but also to indicate an order of precedence.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the present disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the present disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the present disclosure. However, the protection scope of the present disclosure is not limited here. Changes and substitutions that may be easily considered by those skilled in the art shall be included within the protection scope of the present disclosure. Therefore, the protection scope of the present disclosure shall be subject to the protection scope of claims.

## Claims

1. A method for determining a beam, performed by a user equipment (UE), comprising:
determining a first synchronization signal/physical broadcast channel block (SSB) beam, wherein the first SSB beam is used for a random access.

2. The method of claim 1, further comprising:
receiving first information sent by a network device,
wherein the first information indicates a gain difference between a subband full duplex (SBFD) symbol and a non-SBFD symbol, and the non-SBFD symbol comprises at least one of a downlink (DL) symbol or a flexible (F) symbol.

3. The method of claim 2, further comprising:
receiving, on the SBFD symbol and the non-SBFD symbol, a plurality of SSB signals sent by the network device in a plurality of beam directions;
determining first signal strengths corresponding to the plurality of SSB signals respectively by measuring the plurality of SSB signals; and
determining second signal strengths corresponding to the plurality of SSB signals respectively based on the first information and the first signal strengths.

4. The method of claim 3, wherein receiving, on the SBFD symbol and the non-SBFD symbol, the plurality of SSB signals sent by the network device in the plurality of beam directions comprises:
receiving at least one first SSB signal among the plurality of SSB signals on the SBFD symbol; and
receiving at least one second SSB signal among the plurality of SSB signals on the non-SBFD symbol.

5. The method of claim 3 or 4, wherein determining the first SSB beam comprises:
determining the first SSB beam based on the second signal strengths; and
performing the random access using the first SSB beam.

6. The method of claim 5, wherein determining the first SSB beam based on the second signal strength comprises:
determining a beam direction corresponding to an SSB signal with a maximum second signal strength as the first SSB beam.

7. The method of claim 3 or 4, wherein determining the first SSB beam comprises:
determining the first SSB beam based on the first signal strengths; and
performing the random access using the first SSB beam.

8. The method of claim 7, wherein determining the first SSB beam based on the first signal strength comprises:
determining a beam direction corresponding to an SSB signal with a maximum first signal strength as the first SSB beam.

9. The method of claim 7 or 8, further comprising:
determining a second SSB beam based on the second signal strengths;
reporting the second SSB beam to the network device; and
performing, using the second SSB beam, data reception after the random access.

10. The method of claim 9, wherein determining the second SSB beam based on the second signal strength comprises:
determining a beam direction corresponding to an SSB signal with a maximum second signal strength as the second SSB beam.

11. The method of any one of claims 4 to 10, wherein determining the second signal strengths of the plurality of SSB signals based on the first information and the first signal strengths comprises:
determining the second signal strength of the first SSB signal as the first signal strength; and
determining the second signal strength of the second SSB signal as a sum of the first signal strength and the gain difference.

12. The method of claim 1, comprising:
receiving, on an SBFD symbol or a non-SBFD symbol, a plurality of SSB signals sent by a network device in a plurality of beam directions; and
determining first signal strengths corresponding to the plurality of SSB signals respectively by measuring the plurality of SSB signals.

13. The method of claim 12, wherein determining the first SSB beam comprises:
determining the first SSB beam based on the first signal strengths.

14. The method of claim 13, wherein determining the first SSB beam based on the first signal strength comprises:
determining a beam direction corresponding to an SSB signal with a maximum first signal strength as the first SSB beam.

15. A method for determining a beam, performed by a network device, comprising:
sending a plurality of synchronization signal/physical broadcast channel block (SSB) beams,
wherein the plurality of SSB beams comprise a first SSB beam, and the first SSB beam is used for a random access and determined by a user equipment (UE).

16. The method of claim 15, further comprising:
sending first information to the UE,
wherein the first information indicates a gain difference between a subband full duplex (SBFD) symbol and a non-SBFD symbol, and the non-SBFD symbol comprises at least one of a downlink (DL) symbol or a flexible (F) symbol.

17. The method of claim 16, wherein sending the plurality of SSB beams comprises:
sending, on the SBFD symbol and the non-SBFD symbol, a plurality of SSB signals to the UE in a plurality of beam directions.

18. The method of claim 17, wherein sending, on the SBFD symbol and the non-SBFD symbol, the plurality of SSB signals to the UE in the plurality of beam directions comprises:
sending at least one first SSB signal among the plurality of SSB signals to the UE on the SBFD symbol; and
sending at least one second SSB signal among the plurality of SSB signals to the UE on the non-SBFD symbol.

19. The method of any one of claims 15 to 18, further comprising:
receiving a second SSB beam reported by the UE; and
performing, using the second SSB, data transmission after the random access.

20. The method of claim 19, wherein the second SSB beam is a beam direction corresponding to an SSB signal with a maximum second signal strength determined by the UE, a second signal strength is determined by the UE based on the first information and a first signal strength, and the first signal strength is obtained by the UE by measuring the plurality of SSB signals.

21. The method of claim 18, wherein
the second signal strength of the first SSB signal is equal to the first signal strength; and
the second signal strength of the second SSB signal is equal to a sum of the first signal strength and the gain difference.

22. The method of claim 15, wherein sending the plurality of SSB beams comprises:
sending, on an SBFD symbol or a non-SBFD symbol, a plurality of SSB signals to the UE in a plurality of beam directions.

23. An apparatus for determining a beam, configured in a user equipment (UE), comprising:
a determining unit, configured to determine a first synchronization signal/physical broadcast channel block (SSB) beam, wherein the first SSB beam is used for a random access.

24. An apparatus for determining a beam, configured in a network device, comprising:
a sending unit, configured to send a plurality of synchronization signal/physical broadcast channel block (SSB) beams,
wherein the plurality of SSB beams comprise a first SSB beam, and the first SSB beam is used for a random access and determined by a user equipment (UE).

25. A communication apparatus, comprising a processor and a memory for storing a computer program that, when executed by the processor, cause the communication apparatus to implement:
the method of any one of claims 1 to 14; or
the method of any one of claims 15 to 22.

26. A communication apparatus, comprising a processor and an interface circuit, wherein
the interface circuit is configured to receive code instructions and transmit the code instructions to the processor; and
the processor is configured to run the code instructions to implement:
the method of any one of claims 1 to 14; or
the method of any one of claims 15 to 22.

27. A computer-readable storage medium for storing instructions that, when executed, cause a following method to be implemented:
the method of any one of claims 1 to 14; or
the method of any one of claims 15 to 22.

28. A communication system, comprising a user equipment (UE) and a network device, wherein
the UE is configured to implement the method of any one of claims 1 to 14; and
the network device is configured to implement the method of any one of claims 15 to 22.
